# EUROPEAN PATENT APPLICATION

(11) **EP 4 506 286 A1**
(43) Date of publication of application: **12.02.2025**
(21) Application number: 24193467.8
(22) Date of filing: 08.08.2024
(51) Int. Cl.: B65G 54/02

(54) **METHOD AND SERVICE STATION FOR ADJUSTING A TRANSPORT UNIT**

(30) Priority: 09.08.2023 AT 506402023
(71) Applicant: B&R Industrial Automation GmbH, 5142 Eggelsberg (AT)
(72) Inventor: Reinthaler, Michael, 5223 Pfaffstätt (AT)
(74) Representative: Patentanwälte Pinter & Weiss OG

(57) **Abstract**

The present invention relates to a method and to a service station (16) for adjusting a transport unit (3) of an electromagnetic transportation system (1). The transport unit (3) comprises a base body (4), an encoder track (10) connected to the base body (4) for position determination, and a carrier unit (7) for transporting objects (8), which is detachably connected to the base body (4) of the transport unit (3). During usage in the transportation system (1), the transport unit (3) is moved along a stator (2) of the transportation system (1) to move an object (8) arranged on the carrier unit (7) for processing between workstations of a production process. For the adjustment, the transport unit (3) is moved into an adjustment area which is formed by an adjustment segment (17) of the service station (16) (S1). There, the transport unit (3) is positioned at an adjustment position (P) in the adjustment area (S3). By using a positioning device (18, 19) of the service station (16) arranged in the adjustment area, the carrier unit (7) and the encoder track (10) on the base body (4) of the transport unit (3) are aligned relative to one another (S4) in such a way that while using the transport unit (3) in the transportation system (1), a position in the transportation system (1) predetermined for the particular processing in a particular workstation is maintained by the object (8) arranged on the carrier unit (7). After alignment, the transport unit (3) is then moved out of the adjustment area of the service station (S6).

## Description

The present invention relates generally to the field of plant engineering and construction, in particular to the field of automation technology. In particular, the present invention relates to a method for adjusting a transport unit of an electromagnetic transportation system, wherein the transport unit comprises a base body, an encoder track connected to the base body for position determination, and a carrier unit for transporting objects which is detachably connected to the base body of the transport unit, and wherein the transport unit is moved along a stator of the transportation system during usage in the transportation system to move an object arranged on the carrier unit between workstations of a production process for processing. Furthermore, the invention relates to an associated service station for adjusting a transport unit.

### PRIOR ART

Nowadays, most modern production plants require parts, components, workpieces, products, etc. to be moved between the individual handling or production stations using transport facilities - sometimes even over relatively long transportation routes. Various transport and conveyor facilities can be used for this transportation, such as continuous conveyors or conveyor belts of various designs, in which a rotary movement of an electric drive is converted into a linear movement. In the case of continuous conveyors of this type, however, flexibility is considerably limited, and above all individual transportation of single transport units is not possible. Electromagnetic transportation systems in the form of long-stator linear motors (LLM for short) and/or in the form of planar motors (PM for short) are being used with increasing frequency, to meet the requirements for modern and flexible transportation systems - the mode of operation and applications of which are well-known from the prior art.

Examples of long-stator linear motors are known e.g., from WO 2013/143783 A1, US 6,876,107 B2, US 2013/0074724 A1 or WO 2015/042409 A1. These motors generally comprise a stator, which can also be referred to as a "long-stator linear motor stator" or "LLM stator," and at least one transport unit which is also referred to as a "shuttle" or "runner." The stator is usually composed of a large number of stator segments, with a large number of drive coils arranged stationary next to one another on the stator or on the stator segments. The stator segments can have different geometries (for example, straight lines, curves, switches, etc.) and can be assembled by appropriate sequential arrangement to form a desired stator, along which at least one transport unit, usually several transport units, are moved. For this purpose, a number of drive magnets are arranged on the transport unit, which magnets generate a magnetic excitation field. The magnetic excitation field interacts with an electromagnetic field of the drive coils of the stator or the stator segments. By appropriately controlling the individual drive coils, the magnetic flux in the area of the transport unit is regulated, and a propulsive force is generated on the transport unit, or the magnitude of this propulsive force is influenced, whereby the transport unit is moved in a direction of movement along the stator. The stator forms the transportation route. A large number of transport units can be arranged along the transportation route. The movements of these transport units can be controlled individually and independently of each other in that the drive coils interacting with each transport unit are energized - usually by applying an electric voltage. The transport units are thereby held and guided along the transportation route. For this purpose, guide elements are provided which interact with route guide elements provided on the transportation route. Any guide elements and route guide elements such as rollers, wheels, sliding elements, guide surfaces, etc. can be used here.

Furthermore, electromagnetic transportation systems in the form of planar motors are mostly used, for example, in production processes for very flexible transportation processes with complex movement profiles. Like the long-stator linear motor, a planar motor also has a stator. In case of the planar motor, however, the stator forms a transport plane in which one or more transport units can be moved at least two-dimensionally. In the case of the planar motor, the drive coils are usually arranged on the transport plane, and in some embodiments, also on several planes. For the movement of the transport unit in the transport plane, a driving force acting on the transport unit is generated - as in the case of the long-stator linear motor. For this purpose, a magnetic excitation field, which is generated, for example, by drive magnets of the transport unit, interacts with a magnetic field of the stator. In order to cause the transport unit to move in a certain movement direction, at least one of the magnetic fields, usually the magnetic field of the stator, must be variable over time. The other magnetic field, usually the magnetic excitation field of the transport unit, is normally not changeable over time and is created, for example, by permanent magnets arranged on the transport unit - so-called drive magnets. The temporally variable magnetic field of the stator is generated by corresponding control or corresponding energization of the drive coils.

To allow movement of the transport unit in two dimensions characteristic of the planar motor, a two-dimensional interaction of the magnetic fields of the stator and of the particular transport unit is required, wherein one of the two magnetic fields must be temporally variable in at least two dimensions, or both magnetic fields must be temporally variable in at least one dimension. In this case, the drive coils and the drive magnets are advantageously arranged such that, in addition to a one-dimensional movement along the axes spanned by the transportation level, more complex two-dimensional movements of the transport unit on the transportation level are also possible. US 9,202,719 B2 or DE 10 2017 131 324 A1, for example, describes the basic design and mode of operation of a planar motor. Furthermore, applications of a planar motor as a transportation system are shown in EP 3 172 156 B1 or in EP 3 172 134 B1.

With the help of electromagnetic transportation systems, objects such as loads, parts, components, products, workpieces, packaging units (for example, bottles, containers, etc.), etc., can be efficiently moved between individual workstations during a production process. For this purpose, objects to be transported are arranged, for example, on the transport units of the transportation system and moved along a transportation route that is formed by the stator of a long-stator linear motor and/or along a motion profile or transportation path in the transport plane of a planar motor. The workstations are provided along the transportation route or along the transportation path. In the workstations, the objects transported by the transport units of the transportation system can be processed as desired - such as, for example, a certain manufacturing or assembly step on the object, a change in the orientation of the object on the transport unit, a filling process, a measurement on the object, an examination of the object, etc. The necessary processing equipment is provided in the particular workstation. For the processing of the object, the transport unit can be stopped, for example, in the workstation. The processing of the object in a workstation can, for example, also take place during the movement of the transport unit. The object can also be removed from the transport unit, for example for processing, and then placed back onto the same or a different transport unit of the transportation system. A workstation can also be used for the inward transfer of objects or the outward transfer of objects, wherein the object is placed on a transport unit for inward transfer and is removed from the transport unit for outward transfer.

In order to be able to move the objects between the workstations during a production, manufacturing or assembly process with the electromagnetic transportation system, a transport unit usually has a carrier unit which is attached to a base body of the transport unit or which is detachably connected to the base body. An object to be transported is usually attached to or placed on the carrier unit of the transport unit at a predetermined position. The carrier unit usually has a holding device which determines the position of the object on the carrier unit and thus on the transport unit. The holder for the object to be transported can in the simplest case be designed as a recess in the carrier unit, for example, into which the object to be transported is positioned. Furthermore, the holding device can also be designed as a clamp, clip, etc., to fasten the object to be transported on the carrier unit for transportation. Usually, the object to be transported is rigidly connected to the carrier unit and thus to the transport unit by the holding device of the carrier unit.

Typically, a particular position of the transport unit in the electromagnetic transportation system can be determined. For this purpose, the transport unit can have an encoder track which is connected to the base body of the transport unit and interacts with encoder sensors, for example of the transportation system. The encoder track can be designed, for example, as an optically scannable unit (for example, a measuring reference attached to the transport unit, a strip provided with a scannable code, etc.) or as a magnetic unit which comprises a number of magnets - so-called position magnets - for position determination. Corresponding to the design of the encoder track, position sensors (for example, optical sensors, camera units, AMR sensors, Hall elements, etc.) can be provided in the transportation system for position detection, for example along the stator, which sensors detect, for example, an encoder track designed as an optically scannable unit, or measure a property of the magnetic field of the magnets arranged in the encoder track designed as a magnet unit to ascertain the particular position of the transport unit in the transportation system. For example, to determine the position, the drive magnets of the transport unit can be used as an encoder track which is designed as a magnetic unit. Alternatively, for example drive magnets and position magnets can be provided separately from each other in the magnet unit. Furthermore, the position magnets can, for example, also be arranged separately from the drive magnets on the transport unit - for example as its own encoder track.

Furthermore, it is also possible that the position of the transport unit in the transportation system can also be known, for example, on the basis of the control of the drive coils, which is related to the movement of the transport unit in the transportation system, and by using position control or a position controller in a higher-level control unit. Corresponding methods for determining the position of the transport unit in relation to the stationary stator of the transportation system are known from the prior art, such as from WO 2021/105387 A1 or EP 3 376 166 A1. Due to the known position of the transport unit and thus of the carrier unit attached to the base body of the transport unit in the electromagnetic transportation system, a position of the object transported by the transport unit in the transportation system or in a reference coordinate system of the transportation system is also indirectly known. The object is usually positioned in the holding device of the carrier unit, and said holding device predefines the fixed position of the object on the transport unit since the object to be transported is usually rigidly connected to the carrier unit or the transport unit via the holding device. This makes possible or simplifies the automated processing of the object in the particular workstation by the provided processing equipment (for example, an actuator of a robot, robot arm, filling device, measuring sensors, etc.).

However, due to manufacturing tolerances of the transport unit, especially of the carrier unit, and/or due to inaccurate mounting of the carrier unit on the base body of the transport unit, deviations can occur, as a result of which the carrier unit mounted on the base body deviates more or less from a desired ideal position, for example in at least one direction of a Cartesian reference coordinate system (i.e., in the x, y and/or z direction) of the transportation system. Furthermore, after a number of times of usage, signs of wear may occur on the transport unit (for example, abrasion on the guide elements, etc.), which may lead to the deviation of the carrier unit from the desired ideal position. Since the position of an object transported on the carrier unit is fixed by the holding device of the carrier unit, due to the deviations of the carrier unit, the position of the object will also deviate from an expected or predetermined position in the reference coordinate system of the transportation system. The deviations can then lead to problems during the processing of the object in one or more workstations, since the object transported with the transport unit is no longer in the position predetermined and necessary for the processing in question. As a result, errors can occur during processing in the particular workstation, because, depending on the processing, an actuator of an automation unit or of a robot may reach into "empty space", a manufacturing or assembly step may be carried out on the object incorrectly or not at all, the object may be filled incorrectly, for example, or the like. Furthermore, the risk of collision in the transportation system - for example between transport units and/or with processing equipment in workstations - is increased by a carrier unit inaccurately mounted on the base body or due to deviations of the carrier unit from the desired ideal position which arise due to manufacturing tolerances.

The transport units, i.e. especially the base bodies of the transport units, can be optimized, for example mechanically and/or magnetically, to reduce the tolerances and thus the risk of collision between the individual transport units of the transportation system. However, there are technological and, above all, financial limits to this optimization of transport units. Furthermore, neither deviations of the carrier unit from the ideal position due to manufacturing tolerances and/or inaccurate assembly on the base body nor deviations of the carrier unit from the ideal position due to usage-related changes to the transport unit, such as wear on the guide elements, etc. are taken into account.

Another possibility, for example, is to provide each transport unit or base body with an identifier to measure the deviations resulting from manufacturing or tolerances and to store them with the identifier so that they can be taken into account during use of the particular transport unit, for example during processing in a workstation. Such a method is known, for example, from document US 2023/0002167 A1 in which, for example, a position offset is stored for different transport units to correct a position of the particular transport unit in a workstation.

However, even here, deviations of the carrier unit from the ideal position - mainly due to inaccurate mounting on the base body - as well as deviations due to usage-related changes to the transport unit, e.g., due to wear, etc., are not taken into account. These disadvantages could be remedied, for example, by measuring the transport units and corresponding updating the stored deviations of the transport units during ongoing operation. However, this would require an existing transportation system to be expanded, supplemented and adapted, for example with appropriate measuring, storage and evaluation devices, which would involve a great deal of effort and additional costs and could possibly lead to restrictions in operation.

### REPRESENTATION OF THE INVENTION

The invention is therefore based on the object of providing a method and a service station for adjusting a transport unit, with which a carrier unit can be precisely positioned in a simple manner and without major additional measuring and/or automation effort, and without major operational restrictions.

These and other objects are achieved by a method according to the independent claim. Advantageous embodiments of the present invention are described in the dependent claims.

According to the invention, the object is achieved by a method of the type mentioned at the beginning, wherein a transport unit is moved into an adjustment area which is formed by an adjustment segment, wherein the transport unit is positioned at an adjustment position in the adjustment area, wherein by using a positioning device arranged in the adjustment area, the carrier unit and the encoder track on the base body of the transport unit are aligned relative to one another in such a way, that while using the transport unit in the transportation system, the object arranged on the carrier unit maintains a position in the transportation system predetermined for the particular processing in a particular workstation, and wherein after alignment, the transport unit is moved out of the adjustment area.

The main aspect of the proposed solution is that by the adjustment of the transport unit, the carrier unit and the encoder track are precisely aligned in relation to each other at a predetermined or known adjustment position on the base body of the transport unit. Deviations in the position of an object arranged on the carrier unit during a production process from an (ideal) position predetermined in the transportation system are thereby compensated without any additional measurement and automation effort. Such deviations can arise, for example, due to manufacturing tolerances and/or inaccurate mounting, in particular of the carrier unit on the transport unit. By the adjustment of the transport unit, the carrier unit and the encoder track on the base body of the transport unit are aligned with each other in such a way that an object transported during a production process is located, up to the predetermined tolerances, at a position in the transportation system or in the particular workstation at which it is expected for handling in the particular workstation. This means that during the production process, if the transport unit is positioned in the particular workstation with the aid of the encoder track and the encoder sensors of the transportation system, the carrier unit or the object transported by the carrier unit of the transport unit will be located at the particular handling position of the workstation up to the predetermined tolerances and can be processed, placed on the carrier unit or taken from the carrier unit by the particular automation component (for example, robot, etc.) without errors. This results in fewer errors in the handling of the transported objects and a lower risk of collision, for example between the object and an automation component (for example, a robot) in a workstation. Furthermore, incorrectly assembled or mounted transport units can be detected very rapidly using the method according to the invention.

Furthermore, it is advantageous, when a connection between the base body of the transport unit and the carrier unit and/or a connection between the base body of the transport unit and the encoder track is released after moving the transport unit into the adjustment area to such an extent that the carrier unit can be moved relative to the base body of the transport unit in at least one degree of freedom. In this case, the carrier unit and/or the encoder track is only slightly detached from the base body so that the carrier unit and/or the encoder track can be moved in at least one degree of freedom relative to the base body. This means that the carrier unit and/or the encoder track remain fastened in their particular basic positions on the base body of the transport unit, but can be aligned in the particular basic position by means of the positioning device.

Ideally, the connection between the carrier unit and the base body of the transport unit and/or a connection between the encoder track and the base body of the transport unit is fixed again, thereby securing the carrier unit and/or the encoder track in the newly aligned position for using the transport unit in the transportation system.

It is advisable that the transport unit is moved into the adjustment area before a first-time usage in the transportation system. The transport unit can be adjusted before being used for the first time. In this way, for example, inaccurate mounting of the carrier unit on the base body or manufacturing tolerances of the transport unit can be compensated so that the transported object maintains the predetermined position during use of the transport unit. Furthermore, incorrectly mounted transport units can thereby be identified and eliminated even before being used.

It is also advantageous, when the transport unit is moved into the adjustment area after a predeterminable number of times of usage in the transportation system, for example to compensate for wear that occurs due to the use of the transport unit (e.g., wear on the guide elements of the transport unit in the case of long-stator linear motors, etc.) which influences the accuracy of the position of the object to be transported.

Furthermore, it can also be advantageous, when the transport unit is moved into the adjustment area before being used anew in the transportation system after maintenance to detect, for example, mounting errors of wearing parts (for example, guide rollers, etc.) that have occurred during maintenance.

The object is also achieved by a service station for adjusting a transport unit of an electromagnetic transportation system, wherein the transport unit can be arranged to be movable along a stator of the electromagnetic transportation system, and wherein the transport unit has a base body, an encoder track connected to the base body for determining the position, and a carrier unit for transporting objects, which are each detachably connected to the base body. This service station has at least one adjustment segment, which forms an adjustment area and on which the transport unit can be movably arranged, and a positioning device. The positioning device is arranged in the adjustment area and is designed to align the carrier unit and the encoder track on the base body of a transport unit positioned at the adjustment position relative to one another in such a way that while the transport unit is being used in the transportation system, an object arranged on the carrier unit maintains a position in the transportation system predetermined for a particular processing in a particular workstation.

Advantageously, at least one mounting device is provided which is designed to release a connection between the base body and the carrier unit and/or between the base body and the encoder track to such an extent that the carrier unit and/or the encoder track can be moved in at least one degree of freedom relative to the base body of the transport unit. Ideally, the at least one mounting device is also designed to fix the connection between the base body and the carrier unit and/or between the base body and the encoder track again after alignment. With the help of the at least one mounting device, the connection between the base body and the carrier unit and/or the connection between the base body and the encoder track can ideally be automatically released and established.

It is advantageous for the positioning device to be in the form of a mechanical stop. Alternatively, the positioning device can also be designed as an automation unit, in particular as a robot unit, wherein the automation unit ideally comprises the at least one mounting device. This means that all steps in adjusting the transport unit, from releasing the connection to aligning and fixing can be carried out automatically by the automation unit.

An appropriate design of the service station provides that the service station is designed as a "standalone" service station which is very easily used, for example, for adjusting transport units before starting up a transportation system, before using transport units for the first time in a transportation system, or after maintenance of transport units. Alternatively, the service station can ideally be integrated into the electromagnetic transportation system so that, for example, transport units can be very easily moved into the service station during being used in the transportation system for adjustment or for checking alignment, in particular of the carrier unit on the base body of the transport unit.

### SHORT DESCRIPTION OF THE DRAWINGS

The present invention is described in greater detail below with reference to Fig. 1 to 4 which show exemplary, schematic, and non-limiting advantageous embodiments of the invention. In the figures:
Fig.1a is a view of at least a portion of an electromagnetic transportation system designed as a long-stator linear motor
Fig. 1b is a cross-section along a section line A - A through the portion of the electromagnetic transportation system designed as a long-stator linear motor
Fig. 2 is a view of a possible embodiment of an electromagnetic transportation system designed as a planar motor
Fig. 3a is an embodiment of a service station for adjusting a transport unit of an electromagnetic transportation system designed as a long-stator linear motor
Fig. 3b is a further embodiment of a service station for adjusting a transport unit of an electromagnetic transportation system designed as a long-stator linear motor
Fig. 3c is an embodiment of a service station for adjusting a transport unit of an electromagnetic transportation system designed as a planar motor
Fig. 3d is a further embodiment of a service station for adjusting a transport unit of an electromagnetic transportation system designed as a planar motor
Fig. 4 is a sequence of the method for adjusting a transport unit of an electromagnetic transportation system

### EXECUTION OF THE INVENTION

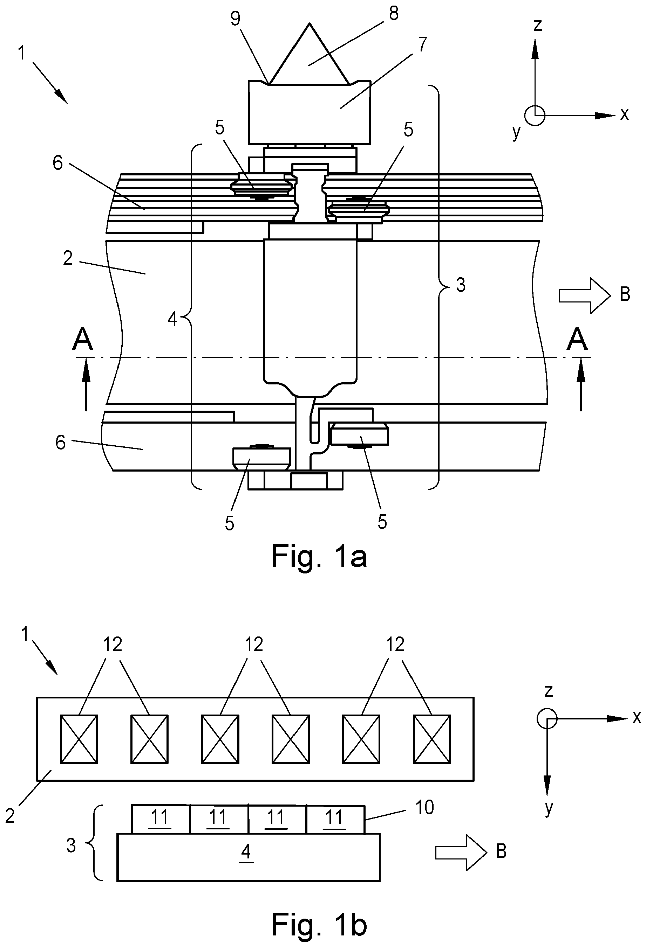

Fig. 1a shows by way of example a side view of an electromagnetic transportation system 1 designed as a long-stator linear motor, wherein for reasons of clarity, only a portion of the long-stator linear motor 1 is shown. The long-stator linear motor 1 has a stator 2 which comprises at least one stator segment, usually a plurality of stator segments. The stator segments can have different geometries or configurations such as straight lines, curves, switches, etc., and can be assembled to form a stator 2 of any shape and/or length. The stator 2 thus forms a transportation route of the long-stator linear motor 1. During operation, at least one transport unit 3 of the transportation system 1, but usually a plurality of transport units 3, are moved along this transportation route in a direction of movement B (for example, in the direction of the x-axis of a reference coordinate system of the transportation system 1).

Workstations can be provided along the transportation route formed by the stator 2, in which an object 8 transported by the transport unit 3 (for example, components, workpieces, products, parts, packaging units such as bottles, containers, etc., or the like) can be processed as desired. This means that the object 8 is transported by the transport unit 3, for example in the direction of movement B, from one workstation to the next workstation and, in the particular workstations, is subjected to a certain manufacturing or assembly step, its orientation on the transport unit 3 is changed, measured, examined, filled, placed on the transport unit 3 or removed therefrom, or the like. The transport unit 3 can be stopped, for example in the workstation, for processing the object 8 by the corresponding processing devices (for example, an actuator of a robot, robot arm, filling device, measuring sensors, etc.). However, the processing of the object 8 in the workstation can also take place while the transport unit 3 is moving.

The transport unit 3 comprises a base body 4 which has guide elements 5 for the movement along the stator 2 or along the transportation route in the direction of movement B. These guide elements 5 interact with route guide elements 6 in order to guide the transport unit 3 along the transportation route or the stator 2.

Furthermore, the transport unit 3 has a carrier unit 7 which is attached to the base body 4 or is detachably connected thereto - for example, by means of a threaded connection. The carrier unit 7 thus serves for the actual transportation of the object 8 to be transported. The carrier unit 7 can therefore be designed differently (for example, in size and shape) depending on the object 8 to be transported, in order to be able to transport, for example, different objects 8 or objects 8 in different stages of production along the transportation route by means of the transport unit 3. Furthermore, the carrier unit 7 has a holding device 9 for secure transportation of the object 8, wherein the holding device 9 can be designed differently depending on the object 8 to be transported. In the simplest case, the holding device 9 can be designed, for example, as a recess 9 in the carrier unit 7, or a simple object receptacle 9 in which the object 8 to be transported is positioned for transportation and/or processing. Furthermore, the holding device 9 can also be designed as a clamp, clip, etc. in order to fasten the object 8 to be transported on the carrier unit 7 during transportation and/or processing on the transport unit 3. In principle, the holding device 9 of the carrier unit 7 specifies a position of the object to be transported in the electromagnetic transportation system 1, which depends on a particular position of the transport unit 3 or of the carrier unit 7 in the transportation system 1.

Furthermore, the transport unit 3 has an encoder track 10 for position determination, which is also attached to the base body 4. The encoder track 10 can be designed, for example, as an optically scannable unit or optically scannable strip which can be arranged, for example, on a top or side surface of the transport unit 3. Alternatively, the encoder track 10 can also be designed as a magnetic unit. For example, the magnet unit, which comprises the drive magnets, can be used as encoder track 10. The encoder track 10 designed in this way or the magnet unit can be arranged, for example, on a side of the base body 4 of the transport unit 3 facing the stator 2 and is therefore not visible in Fig. 1a. Fig. 1b therefore shows, by way of example and schematically, a cross-section along a section line A-A through the portion of the electromagnetic transportation system 1 designed as a long-stator linear motor shown by way of example in Fig. 1 a.

Here, Fig. 1b shows the transport unit 3 with the base body 4 and the magnet unit attached to the base body 4 which serves as the encoder track 10. The magnet unit comprises a plurality of magnets 11 which serve as drive magnets 11 and are simultaneously used for position determination, for example. However, it is also possible that in addition to the drive magnets 11, separate position magnets are provided in the magnet unit for position determination or that, for example, drive magnets 11 and position magnets are attached separately from one another, for example in their own magnet units on the transport unit 3, wherein the magnet unit which comprises the position magnets then forms the encoder track 10.

Furthermore, position sensors (for example, optical sensors, camera sensors, AMR sensors, Hall elements, etc.), which are not shown in Fig. 1a and 1b for the sake of clarity, are usually provided on the stator 2. These position sensors interact with the encoder track 10 arranged on the transport unit 3 in order to determine a current position of the transport unit 3 in the transportation system 1 or along the transportation route. For this purpose, the encoder track 10 can be optically scanned for example by the position sensors, or for example a property of the magnetic field of the magnets 11 arranged in the encoder track 10 can be measured. The position information from the position sensors can then be used, for example, in the production process and for the movement of the transport unit 3 along the stator 2.

In order to be able to move the transport unit 3 along the stator 2, the stator 2 (or the particular stator segments of the stator 2) has - as can be seen from Fig. 1b - a plurality of drive coils 12. The drive coils 12 are arranged next to each other in the direction of movement B, for example on a stationary holder. The drive coils 12 are accordingly energized to regulate the movement of the transport unit 3 along the transportation route or along the stator 2 under the control of a higher-level control unit of the transportation system 1. The regulation of the movement of the transport unit 3 along the transportation route or along the stator 2 and the thereby associated control of the involved drive coils 12 are sufficiently known, for example, from EP 3 385 110 A1 or EP 3 376 166 A1 and will not be explained in more detail here, since the invention does not depend on the specific regulation or control of the drive coils 12. In principle, by means of an appropriate control of the higher-level control unit, the drive coils 12 of the stator 2 in the region of at least one transport unit 3 are energized in order to generate a moving drive magnetic field. This drive magnetic field interacts with drive magnets 11 and thereby causes a movement of the transport unit 3 in the direction of movement B. As a result, the transport unit 3 and thus the object 8 transported by the transport unit 3 can be moved to predetermined positions along the transportation route in the transportation system 1.

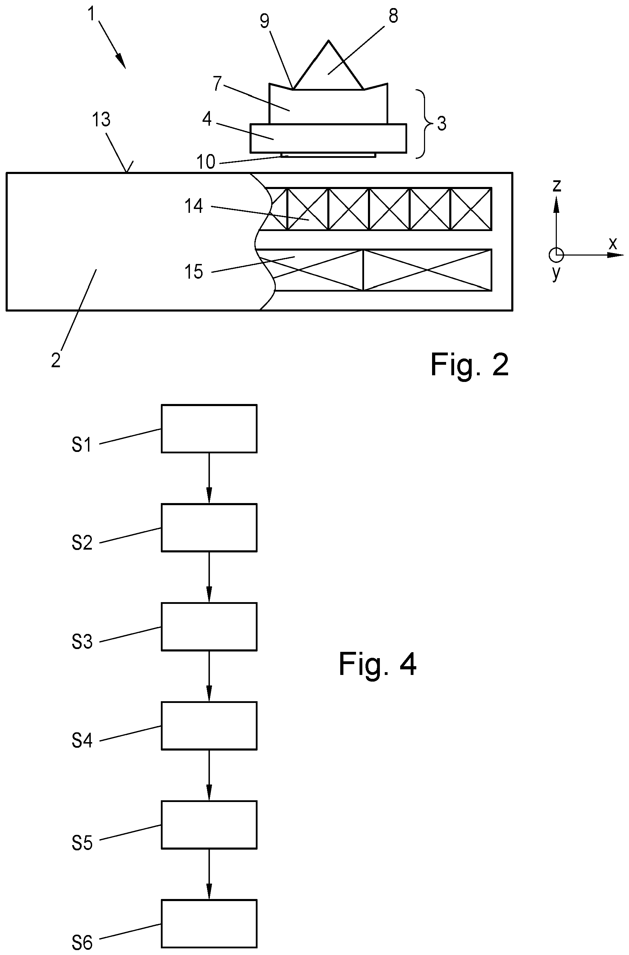

Alternatively, the electromagnetic transportation system 1 can also be designed as a planar motor. Fig. 2 shows a simplified exemplary embodiment of a transportation system 1 designed as a planar motor in a partially cutaway side view. The planar motor 1 has a stator 2 which comprises at least one transport or stator segment. The stator 2 forms a transport plane 13, wherein the transport plane 13 is determined by the size and shape of the stator 2 or by the at least one stator segment forming the stator 2, and can be arbitrarily aligned in space. For the sake of simplicity, only one stator segment or a section of the stator 2 is shown in Fig. 2. However, a plurality of (even different) stator segments can also be arranged in a row to form the stator 2 and a larger transport plane 13.

On the transport plane 13, at least one transport unit 3 of the transportation system 1 can be moved along a transportation path at least two-dimensionally in two directions of movement - for example in the direction of the x-axis and in the direction of the y-axis of the reference coordinate system of the transportation system 1. For this purpose, a plurality of drive coils are arranged on the stator 2 or on the stator segment in drive coil groups 14, 15, wherein, for example, a first drive coil group 14 defines a first direction of movement (for example, in the direction of the x-axis of the reference coordinate system of the transportation system 1) and, for example, a second drive coil group 15 defines a second direction of movement (for example, in the direction of the y-axis of the reference coordinate system of the transportation system 1). The drive coils of the first and second drive coil groups 14, 15 can, for example, as shown in Fig. 2, be arranged relative to one another such that the two directions of movement are orthogonal to one another. This allows the transport unit 3 to be moved, for example, along any transportation path on the transport plane 13 in a plane that is spanned by the x- and y-axes of the reference coordinate system of the transportation system 1. With a corresponding structural design of the stator 2 or of the at least one stator segment and of the particular transport unit 3, for example, movements can also be carried out which additionally use the other four degrees of freedom of movement at least to a limited extent - i.e. a translational movement in the direction of the z-axis of the reference coordinate system and rotations about the x-, y- and z-axes.

The regulation of the movement of the at least one transport unit 3 along the transportation path on the transport plane 13 and the thereby associated control of the involved drive coils of the particular drive coil groups 14, 15 are sufficiently known, for example, from WO2021/105165 A1 or WO 2021/175885 A1. In principle, the drive coils of at least one of the drive coil groups 14, 15 in the region of the transport unit 3 are energized in order to generate a moving drive magnetic field. The movable drive magnetic field then interacts electromagnetically with drive magnets arranged on the transport unit 3, whereby the transport unit 3 can be moved along a predefined transportation path or to predetermined positions on the transport plane 13 to transport objects 8, for example, between workstations for a particular processing.

The transport unit 3 of the planar motor 1 also has a base body 4. A magnet unit, which is connected to the base body 4, is arranged on the base body 4 on a side facing the transport plane 13 or on an underside. The magnet unit comprises at least the drive magnets 11 of the transport unit 3 and can be used as an encoder track 10 for determining a position of the transport unit on the transport plane 3 or in the transportation system 1. This means that the drive magnets 11 also serve as position magnets. Furthermore, in the magnet unit used as encoder track 10, for example, in addition to the drive magnets, separate magnets 11 for position determination, i.e. position magnets, can be provided, or the transport unit 3 has, for example, an encoder track 10 or magnet unit which comprises only position magnets 11. This means that drive magnets and position magnets 11 are for example arranged separately from one another on the transport unit 3. With the aid of the encoder track 10 or the magnets 11 used therein to determine position, the current position of the transport unit 3 on the transport plane 13 or in the transportation system 1 can be determined via corresponding position sensors (for example, AMR sensors, Hall elements, etc.) and used in the production process or in the particular workstations for handling the object 8. Alternatively, the transport unit 3 could have an encoder track 10 which is designed as an optically scannable unit. Such an encoder track 10 can be arranged, for example, on a top or side surface of the transport unit 3 and can be detected or scanned by means of optical sensors (for example, camera sensor, etc.) to determine the position of the transport unit 3.

Furthermore, the transport unit 3 has a carrier unit 7 which is detachably connected to the base body 4 and which is attached to a top side of the base body 4 (facing away from the transport plane 13). The carrier unit 7 can be designed differently (for example, in size and shape) depending on the object 8 to be transported, in order to be able to transport, for example, different objects 8 or objects 8 in different stages of production by means of the transport unit 3. The object 8 to be transported can be arranged for transportation in a holding device 9 on the carrier unit 7. The holding device 9 of the carrier unit 7 can also in the simplest case be designed, for example, as a recess 9 or object receptacle 9 in which the object 8 to be transported is positioned for transportation and/or processing in the workstations. However, also designing the holding device 9 as a clamp, clip, etc. is also possible in order to fasten the object 8 to be transported on the carrier unit 7 on the transport unit 3 during transportation and/or processing. Also, in the case of the planar motor 1, a position of the transported object 9 on the transport plane 13 or on the transportation path is also determined in principle by the holding device 9 of the carrier unit 7 and thus by the position of the transport unit 3 in the transportation system 1.

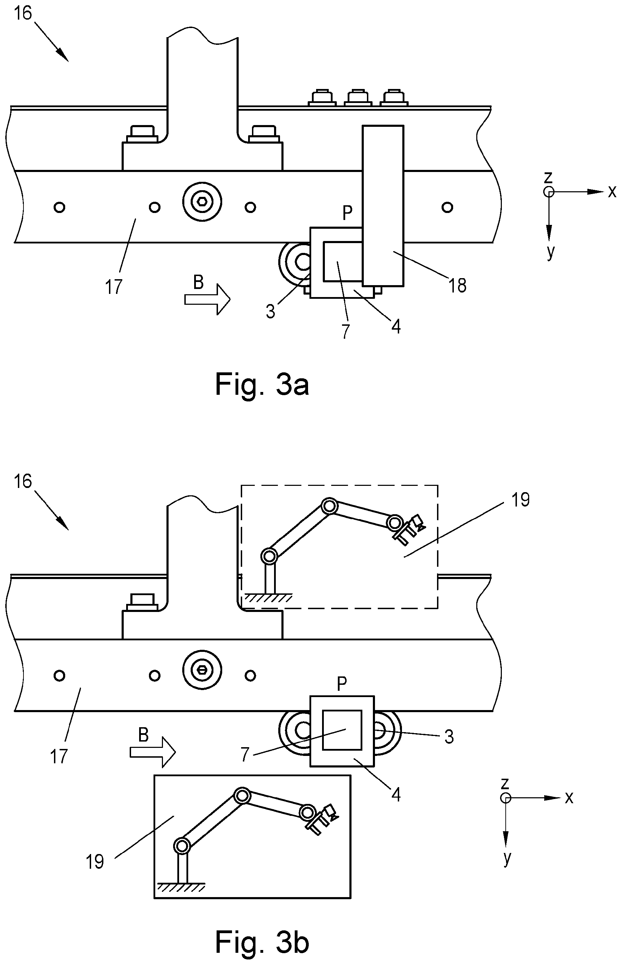

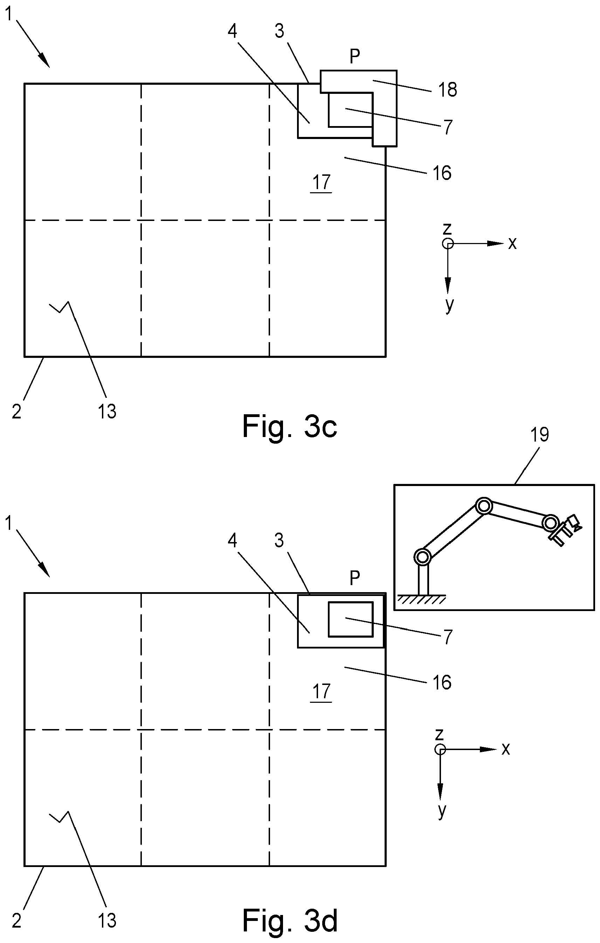

Fig. 3a, 3b, 3c and 3d show, by way of example and schematically, different embodiments of a service station for adjusting a transport unit 3 of an electromagnetic transportation system 1. Fig. 3a and 3b relate to possible embodiments of a service station for adjusting a transport unit 3 of a transportation system 1 designed as a long-stator linear motor. Fig. 3c and 3d show possible embodiments of a service station for adjusting a transport unit 3 of a transportation system 1 designed as a planar motor.

Fig. 3a and 3b show a service station 16 for adjusting a transport unit 3 of an electromagnetic transportation system 1 or for a long-stator linear motor 1. The service station 16 has at least one adjustment segment 17, along which the transport unit 3 to be adjusted can be moved in the direction of movement B. The adjustment segment 17 forms an adjustment area in which an adjustment position P is provided. For example, a stator segment of the stator 2 of the transportation system 1 can be used as the adjustment segment 17, along which the transport unit 3 is moved to the adjustment position P by appropriate control of the drive coils 12. However, the adjustment segment 17 can also be designed as a "reduced" segment of the transportation route, which, for example, has no drive coils and along which the transport unit 3 can be moved to the adjustment position P, for example manually or by means of an automation unit (for example, a robot). For this purpose, the adjustment segment 17 comprises, for example, at least corresponding route guide elements 6 which interact with the guide elements 5 of the transport unit 3, and a sensor system for position detection, so that a position of the transport unit 3 on the adjustment segment 17 or in the adjustment area can be determined.

The adjustment position P is a known position in the reference coordinate system of the transportation system 1 or at least of the service station 16. This means that the x-, y- and z-coordinates of the adjustment position P in the reference coordinate system are known. The transport unit 3 to be adjusted can be moved precisely to the adjustment position P or positioned precisely at the adjustment position P with the aid of the encoder sensors (for example, position sensors, position controllers, etc.) of the transportation system 1, whereby the position of the transport unit 3 during adjustment is known.

Furthermore, the service station 16 has a positioning device 18, 19, which is arranged in the adjustment area - ideally at the adjustment position P. The positioning device 18, 19 is designed to align the carrier unit 7 and the encoder track 10 of the transport unit 3 positioned at the adjustment position P relative to one another on the base body 4. As a result, while using the transport unit 3 in the transportation system 1 - i.e. when the transport unit 3 is transporting an object 8 between workstations - the transported object 8 arranged on the carrier unit 7 precisely maintains a predetermined position which is necessary for a particular processing in a particular workstation.

In a very simple embodiment of the service station 16, as for example shown in Fig. 3a, the positioning device 18 can be designed as a mechanical stop 18 against which the transport unit 3 is positioned. The mechanical stop 18 can, for example, be designed such that, for example, either the carrier unit 7 can be aligned relative to the encoder track 10 or the encoder track 10 can be aligned relative to the carrier unit 7 on the base body 4, by the mechanical stop 18. However, it is also conceivable that both the carrier unit 7 and the encoder track 10 are aligned relative to each other on the base body 4 of the transport unit 3 by the mechanical stop 18. In the simplest case, for example, the carrier unit 7 and/or the encoder track 10 are aligned on the base body 4 in at least one degree of freedom. In the service station 16, shown by way of example in Fig. 3a, the carrier unit 7 can be moved and thus aligned by shifting in the direction of the x-axis and/or by rotating about the z-axis on the base body 4 relative to the encoder track 10 (not visible in Fig. 3a), for example. With a corresponding design of the mechanical stop 18, the carrier unit 7 can, for example, additionally be aligned in the direction of the y-axis and/or in the direction of the z-axis so that the transported object 8 maintains the defined position upon using the transport unit 3. However, the mechanical stop 18 can also be designed such that instead of the carrier unit 7, the encoder track 10 (for example, if a magnet unit is used as the encoder track 10) is displaced relative to the carrier unit 7, for example in the direction of the x-axis, or such that both the carrier unit 7 and the encoder track 10 are moved in at least one degree of freedom to align them relative to one another on the base body 4. For the alignment, for example, the carrier unit 7 can be moved in the direction of the x-axis and/or by rotation about the z-axis on the base body 4, and additionally, the encoder track 10 can be moved, for example, in the direction of the x-axis.

In a special embodiment of the service station 16, for example an already adjusted transport unit 3 can be used as a mechanical stop 18. The carrier units 7 of all other transport units 3 of the transportation system 1 can then be aligned with this transport unit 3 serving as a mechanical stop 18.

Alternatively, the positioning device 19 can also be designed as an automation unit 19, as shown by way of example in Fig. 3b. The automation unit 19 can be arranged in the adjustment area of the service station 16, for example on one side of the adjustment segment 17 on which the transport unit 3 is moved. Alternatively, the automation unit 19 (shown in Fig. 3b framed by a dashed line) can also be arranged, for example, on a side of the adjustment segment 17 which is opposite the side on which the transport unit 3 is moved. The automation unit 19 can, for example, be designed as a robot unit 19, by means of which the carrier unit 7 and/or the encoder track 10 on the base body 4 of the transport unit 3 are accordingly aligned. The robot unit 19 can, for example, be programmed to align the carrier unit 7 and the encoder track 10 relative to one another such that the holding device 9 of the carrier unit 7 and thus an object 8 to be transported has a predetermined position (for example, predetermined x-, y- and z-coordinates) at the adjustment position P, wherein for example predetermined tolerances can be taken into account during alignment. Alternatively, the automation unit 19 for aligning the carrier unit 8 and/or the encoder track 10 can also be designed as a combination of at least one actuator with, for example, optical sensors for measuring the position of the carrier unit 7 or of the encoder track 10 on the base body 4 of the transport unit 3.

At least the connection between the carrier unit 7 and the base body 4 must be released to such an extent that the carrier unit 7 can be moved at least in one degree of freedom relative to the base body 4 for positioning, that the carrier unit 7 and the encoder track 10 on the base body 4 of the transport unit 3 in the service station 16 can be aligned relative to one another, for example, after movement of the transport unit 3 into the adjustment area. Where appropriate, the connection between the encoder track 10, if this is for example designed as a magnetic unit, and the base body 4 can also be released to such an extent that the encoder track 10 can be moved for positioning at least in one degree of freedom relative to the base body 4. This means that, for example, in the case of a threaded connection between the carrier unit 7 or the encoder track 10 and the base body 4, this is easily released so that the carrier unit 7 and/or the encoder track 10 or magnet unit 10 can be displaced relative to the base body 4 and also to each other at least in the x, y or z direction or rotated about the x-, y- or z-axis. For this purpose, the connection between the carrier unit 7 and the base body 4 and/or the connection between the encoder track 10 and the base body 4 can be manually released or loosened, for example after moving the transport unit 3 into the service station 16 or into the adjustment area. After aligning the carrier unit 7 and the encoder track 10 relative to each other on the base body 4, the connection between the carrier unit 7 and the base body 4 can again be fixed, for example manually, in order to fasten the carrier unit 7 in the correct, adjusted position on the base body 4. If the connection between the encoder track 10 - for example, in the case of a magnet unit as encoder track 10 - and the base body 4 has also been slightly loosened, this connection can again be fixed after alignment so that the encoder track 10 is likewise fastened to the base body 4 in the correct, adjusted position.

For automated handling, the service station can have at least one mounting device (not shown in Fig. 3a and 3b for the sake of clarity) which is designed to loosen the connection between the carrier unit 7 and the base body 4 and/or the connection between the encoder track 10 and the base body 4, or to release it to such an extent that the carrier unit 7 and the encoder track 10 can be moved relative to one another in at least one degree of freedom on the base body 4 for correct positioning. Furthermore, the mounting device can also be designed to again fix the connection between the base body 4 and the carrier unit 7 and/or the connection between the encoder track 10 and the carrier unit 7 after alignment. Alternatively, depending on the design of the service station 16, a further mounting device can be provided which takes over the fixation of the carrier unit 7 or the encoder track 10 on the base body 4 after alignment. The at least one mounting device as well as the further mounting device can be designed, for example, as robot units or as actuators. In the case of a service station 16 with a positioning device 19 designed as an automation unit 19 (for example, a robot unit), the mounting device and thus the loosening or slight releasing of the connection between the carrier unit 7 and the base body 4 before alignment and/or the re-fixing of the connection after alignment can be integrated into the positioning device 19.

The service station 16 for adjustment can, for example, be designed as a "standalone" service station. In other words, the service station 16 basically consists only of the adjustment segment 17 - for example, as shown in Fig. 3a and 3b - to which the transport units 3 are attached, for example, before a first-time usage in a transportation system 1 or startup of a transportation system 1, or after maintenance or after replacement of wearing parts (for example, guide elements 5, etc.), or after a predeterminable number of uses in the transportation system 1, in order to align the carrier unit 7 and the encoder track 10 relative to each other on the base body 4 of the transport unit 3 for the first time or again after maintenance. If the adjustment segment 17 is designed as a stator segment, for example, the service station 16 can itself represent a small electromagnetic transportation system 1 - for example, a small long-stator linear motor. Alternatively, the service station 16 can also be integrated into the electromagnetic transportation system 1. In other words, the adjustment segment 17 of the service station 16 forms a route section of the electromagnetic transportation system 1. A service station 16 for adjusting the transport units 3 of a long-stator linear motor 1 can, for example, be arranged in a route parallel to the transportation route of the transportation system 1 so that the transportation system 1 or the associated production plant can continue to work unhindered. Transport units 3 to be adjusted can, for example, be moved via a switch in an entry/exit area into the parallel route and thus to the service station 16. After adjustment, the transport unit 3 can be moved from the parallel route to the transportation route of the transportation system 1 or transferred into it via another entry/exit area. This means that the transport units 3 can also be adjusted during ongoing operation of a long-stator linear motor, for example after a predefined number of times of usage, kilometers traveled or switch activations, for example in order to adapt the position of the carrier unit 7 or the object 8 to be transported to wear, for example of the guide elements 5.

Fig. 3c and 3d show, by way of example and schematically, a service station 16 for adjusting a transport unit 3 of an electromagnetic transportation system 1, wherein the electromagnetic transportation system 1 is designed as a planar motor 1 with a stator 2 consisting of a plurality of stator segments. The service station 16 shown as an example in Fig. 3c and 3d is, for example, integrated into the planar motor 1 - i.e. the service station 16, or a surface of the at least one adjustment segment 17 of the service station 16 forms part of the transport plane 13 on which the at least one transport unit 3 which is to be adjusted can be moved. Alternatively, the service station 16 can however also be designed as a "standalone" service station, wherein the service station 16 with the at least one adjustment segment 17 can be designed, for example, as a small planar motor 1. Alternatively, the adjustment segment 17 of the service station 16 can also be designed as a "reduced" segment - i.e. with at least one sensor system for position detection. The transport unit 3 to be adjusted is then moved into or within the service station 16, for example manually or with the aid of an automation unit (for example, a robot).

The adjustment segment 17 of the service station 16 also forms an adjustment area for the planar motor 1 with an adjustment position P (with x-, -y and z-coordinates known in the reference coordinate system of the transportation system 1) at which the transport unit 3 to be adjusted can be precisely positioned, for example with the aid of position sensors, position controllers, etc. of the transportation system 1.

Furthermore, the service station 16 again comprises a positioning device 18, 19, which is arranged in the adjustment area - ideally at the adjustment position P - and with which the carrier unit 7 and the encoder track 10 of the transport unit 3 positioned at the adjustment position P on the base body 4 can be aligned relative to one another in such a way that while using the transport unit 3 in the transportation system 1 - i.e. when the transport unit 3 transports an object 8 between workstations - the transported object 8 arranged on the carrier unit 7 maintains a predetermined position which is specified and necessary for a particular processing in a particular workstation. In the simplest case, the positioning device 18, 19 can - as shown in Fig. 3c - again be designed, for example, as a mechanical stop 18. In Fig. 3c, for example, an angled mechanical stop 18 is shown, with which in the simplest case, for example, the carrier unit 7 of the transport unit 3 can be aligned relative to the base body 4 and relative to the encoder track 10, for example by being moved in the x- and y-directions or, if necessary, by being rotated about the z-axis, so that the transported object 8 maintains the predetermined position while using the transport unit 3. The mechanical stop 18 can however also be designed, for example, such that the encoder track 10 (if designed, for example, as a magnetic unit) is aligned, for example, by being moved in the direction of the z-axis or, if applicable, by being rotated about the z-axis relative to the base body 4 and relative to the carrier unit 7, so that the transported object 8 maintains the predetermined position while using the transport unit 3. Furthermore, it is also conceivable that the mechanical stop 18 be designed in such a way that not only the carrier unit 7 - for example by being moved in the x- and y-directions and/or by being rotated about the z-axis - but also the encoder track 10 - for example by being moved in the z-direction and/or by being rotated about the z-axis - are aligned relative to the base body 4 and relative to each other, so that the object 8 to be transported maintains a predetermined position while using the transport unit 3.

Alternatively, the positioning device 19 - as shown by way of example in Fig. 3d - can also be designed as an automation unit 19 (for example, a robot unit, combination of actuator and sensors). The automation unit 19 is then mounted, for example, in the adjustment area - ideally in the area of the adjustment position P.

Furthermore, again at least one mounting device (not shown in Fig. 3c and 3d for reasons of clarity) can be provided in the service station 16. The mounting device can automatically release or loosen the connection between the carrier unit 7 and the base body 4 or the connection between the encoder track 10 and the base body 4 after moving the transport unit 3 into the adjustment area to such an extent that the carrier unit 8 and/or the encoder track 10 can be moved relative to the base body 4 in at least one degree of freedom for the alignment - i.e. can be moved at least in the x-, y- or z-direction relative to the base body 4 or rotated about the x-, y- or z-axis relative to the base body 4. Furthermore, after the alignment of the carrier unit 7 and/or the encoder track 10 relative to the base body 4 of the transport unit 3 or the alignment of the carrier unit 7 and encoder track 10 relative to each other, the connection between the carrier unit 7 and base body 4 and/or the connection between the encoder track 10 and base body 4 can again be fixed, for example by the at least one mounting device or by a further mounting device, in order to fasten the carrier unit 7 and/or the encoder track 10 in the correct, adjusted position on the base body 4. Alternatively, the release and/or fixation of the connection between the carrier unit 8 and the base body 4 and/or the connection between the encoder track 10 and the base body 4 can be carried out manually. When the positioning device 19 is designed as an automation unit 19 (Fig. 3d), the at least one mounting device can again be integrated again into the automation unit 19 so that the release and/or fixation of the connection between the carrier unit 7 and the base body 4 and/or the connection between the encoder track 10 and the base body 4 can additionally be taken over by the positioning device 19.

Fig. 4 shows schematically an exemplary sequence of the method for adjusting a transport unit 3 of an electromagnetic transportation system 1 which can be designed, for example, as a long-stator linear motor or as a planar motor. In an entry step S1, the transport unit 3 is moved into an adjustment area which is formed by an adjustment segment 17 of the service station 16. For this purpose, in the case of a service station 16 integrated into the transportation system 1, wherein for example a stator segment is used as an adjustment segment 17, the transport unit 3 can for example be outwardly transferred from the transportation route of the long-stator linear motor 1 and moved to the service station 16, or can be moved to the service station 16 on the transport plane 13 of the planar motor 1 via a corresponding transportation path. In the case of a service station 16 designed as a "standalone" service station, in the entry step S1, the transport unit 3 to be adjusted is attached, for example, to the adjustment segment 17 of the service station 16 and on this, depending on the design of the adjustment segment 17, can be moved, for example manually, by an automation unit (for example, a robot) or by corresponding energization of the drive coils 12, in case a stator segment is used as the adjustment segment 17.

In a release step S2, at least the connection of the carrier unit 7 to the base body 4 of the transport unit 3 is released to such an extent that the carrier unit 7 can be moved relative to the base body 4 of the transport unit 3 in at least one degree of freedom. Alternatively or additionally, for example in the case of a magnet unit as the encoder track 10, the connection of the encoder track 10 to the base body 4 can be released to such an extent that the encoder track 10 can be moved relative to the base body 4 in at least one degree of freedom. The release step S2 can be carried out manually, for example, in the adjustment area or in the service station 16. Alternatively, the release step S2 can also be carried out automatically - for example by a corresponding mounting device of the service station 16 or by a mounting device integrated into the positioning device 19 if the positioning device 19 is designed as an automation unit 19, for example. In the release step S2, for example in the case of a threaded connection between the base body 4 of the transport unit 3 and the carrier unit 7, the screws can be loosened to such an extent that the carrier unit 7 can be displaced relative to the base body 4, for example in at least one of the directions of the x-, y- or z-axes, or can be rotated relative to the base body 4 at least about one of the x-, y- or z-axes.

In a positioning step S3, the transport unit 3 - with the carrier unit 7 slightly released from the base body 4 - is then positioned at the adjustment position P in the adjustment area. If necessary, the encoder track 10 (for example, in the case of a magnet unit as the encoder track 10) can also be slightly released from the base body 4 in addition or alternative to the carrier unit 7. For the precise positioning of the transport unit 3 at the adjustment position P, for example the encoder sensors of the transportation system 1 (for example, position sensors, a position controller in a higher-level control unit of the transportation system 1, etc.) can be used.

In an alignment step S4, the carrier unit 7 and the encoder track 10 on the base body 4 of the transport unit 3 are then aligned relative to one another at the known adjustment position P by means of the positioning device 18, 19 arranged in the adjustment area. Since the x-, y- and z-coordinates of the adjustment position P in the transportation system 1 are known, the position of the transport unit 3 during adjustment is also known, whereby the carrier unit 7 and the encoder track 10 on the base body 4 can be precisely aligned relative to one another so that while using the transport unit 3, the positions predetermined by the carrier unit 7 or the transported object 8 are maintained. A mechanical stop 18, an already adjusted transport unit 3 or an automation device 19 (for example, a robot unit, actuator-sensor combination, etc.) can for example be used as the positioning device 18, 19.

In the alignment step S4, the positioning device 18, 19 aligns the carrier unit 7 and encoder track 10 relative to each other on the base body 4 in such a way that while using the transport unit 3 in the transportation system 1, the object 8 arranged on the carrier unit 7 maintains a position predetermined for the particular processing in a particular workstation. This means that, for example, with the aid of the positioning device 18, 19, the carrier unit 7 is moved and positioned relative to the encoder track 10 on the base body 4 in such a way that a position predetermined for the particular processing in a particular workstation is maintained by an object 8 arranged on the carrier unit 7. If necessary, the encoder track 10 can alternatively be moved and positioned relative to the carrier unit 7 on the base body 4 so that during the usage of the transport unit 3, the transported object 8 maintains a position predetermined for the particular processing. However, it is also possible that not only the carrier unit 7 but also the encoder track 10 are moved and positioned relative to one another on the base body in such a way that after alignment while using the transport unit 3 in the transportation system 1, the object 8 arranged on the carrier unit 7 maintains a position predetermined for the particular processing in a particular workstation. If using an adjusted transport unit 3 in the transportation system 1 or in a production process, the carrier unit 7 and thus the transported object 8 will be located at a position in the transportation system 1 (for example, at predefined or expected x-, y- and z-coordinates in the reference coordinate system of the transportation system 1) which is expected in the particular workstation for the particular processing of the object 8. This allows the particular processing of the object 8 to be carried out without errors in the particular workstation. In the alignment step S4 during alignment of the carrier unit 8 and/or the encoder track 10 on the base body 4, predeterminable tolerances can also be taken into account, so that the position of the object 8, which is fixedly predetermined by the holding device 9 of the carrier unit 7, lies within a tolerance range in which error-free processing in the particular workstation is possible.

After the alignment step S4, in a fixation step S5, the connection between the carrier unit 7 and the base body 4 of the transport unit 3 and/or the connection between the encoder track 10 and the base body 4 of the transport unit 3 is then again fixed. The carrier unit 7 and/or the encoder track 10 are thus fastened in the readjusted position on the base body 4. The fixation step S5 can be carried out manually, for example following the alignment step S4 in the service station 13, for example by manually tightening up the screws in the case of a threaded connection between the carrier unit 7 and the base body 4. Alternatively, the fixation step S5 can also be carried out automatically by the at least one mounting device of the service station 16, a further mounting device for the fixation of the connection between the carrier unit 7 and the base body 4 and/or the connection of the encoder track 10 and the base body 4 in the service station 16, or by a positioning device 19 designed as an automation unit into which the mounting device is integrated.

In an exit step S6, after the fixation of the carrier unit 7 and/or the encoder track 10 on the base body 4 (in the aligned position), the transport unit 3 is moved out of the adjustment area of the service station 16. In the case of a "standalone" service station 16, for example the adjusted transport unit 3 can be removed from the adjustment segment 17 of the service station 16, for example, in order to make room for another transport unit 3 to be adjusted. Depending on the design of the adjustment segment 17, the transport unit 3 can be removed, for example manually, by means of an automation unit (for example, a robot) or with the aid of the drive coils 12 in the case of a stator segment used as the adjustment segment 17. In the case of a service station 16 integrated into a transportation system 1 and having a stator segment as an adjustment segment 17, the adjusted transport unit 3 can be moved out of the service station, for example, via an entry/exit area and inwardly transferred back into the transportation route of the linear motor 1 or, for example, moved out of the service station 16 on the transport plane 13 of the planar motor 1 via a corresponding transportation path and used again for the transportation of objects on the transport plane 13.

The method according to the invention can be carried out, for example, before a first-time usage of the transport unit 3 for the first time in the transportation system 1, or before starting up the transportation system 1 in order to remedy a possibly inaccurate mounting of the carrier unit 7 on the base body 4 of the transport unit 3 and/or to compensate for manufacturing tolerances of the transport unit 3 and/or the carrier unit 7. Furthermore, the method can be carried out, for example, after a predeterminable number of times of usage of the transport unit 3 in the transportation system 1, after a predeterminable number of kilometers traveled by the transport unit 3 in the transportation system 1, etc., for example to compensate for wear occurring through the usage of the transport unit 3 (for example, wear on the guide elements 5 of the transport unit 3 in the case of long-stator linear motors, etc.). Furthermore, the method can also be carried out after maintenance of the transport unit 3 - in particular after replacement of components and/or wearing parts (for example, guide elements 5) - before the transport unit 3 is used anew in the transportation system 1.

### List of reference signs

- 1: Electromagnetic transportation system
- 2: Stator
- 3: Transport unit
- 4: Base body of the transport unit
- 5: Guide elements
- 6: Route guide element
- 7: Carrier unit
- 8: Object to be transported
- 9: Holding device
- 10: Encoder track or magnet unit
- 11: (Drive) magnets
- 12: Drive coils
- 13: Transport plane
- 14: First drive coil group
- 15: Second drive coil group
- 16: Service station
- 17: Adjustment segment
- 18: Positioning device or mechanical stop
- 19: Positioning device or automation unit or robot unit
- A: Section line
- B: Direction of movement
- P: Adjustment position
- x, y, z: Directions of the reference coordinate system
- S1: Entry step
- S2: Release step
- S3: Positioning step
- S4: Alignment step
- S5: Fixation step
- S6: Exit step

## Claims

1. A method for adjusting a transport unit (3) of an electromagnetic transportation system (1), wherein the transport unit (3) comprises a base body (4), an encoder track (10) connected to the base body (4) for position determination and a carrier unit (7) detachably connected to the base body (4) for transporting objects (8), and wherein the transport unit (3) is moved along a stator (2) of the transportation system (1) during operation in the transportation system (3) to move an object (8) arranged on the carrier unit (7) for processing between workstations, ***characterized in that*** the transport unit (3) is moved into an adjustment area, which is formed by an adjustment segment (17) (S1), ***that*** the transport unit (3) is positioned at an adjustment position (P) in the adjustment area (S3), ***that*** by using a positioning device (18, 19) arranged in the adjustment area, the carrier unit (7) and the encoder track (10) on the base body (4) of the transport unit are aligned relative to one another (S4) in such a way, that while using the transport unit (3) in the transportation system (1), the object (8) arranged on the carrier unit (7) maintains a position in the transportation system (1) predetermined for the particular processing in a particular workstation, ***and that*** after alignment, the transport unit (3) is moved out of the adjustment area (S6).

2. The method according to claim 1, ***characterized in that*** after moving the transport unit (3) into the adjustment area (S2), a connection between the base body (4) of the transport unit (3) and the carrier unit (7) and/or a connection between the base body (4) of the transport unit (3) and the encoder track (10) is released to such an extent that the carrier unit (7) can be moved relative to the base body (4) of the transport unit (3) in at least one degree of freedom.

3. The method according to any of claims 1 or 2, ***characterized in that*** after the alignment, the connection between the carrier unit (7) and the base body (4) of the transport unit (3) and/or a connection between the encoder track (10) and the base body (4) of the transport unit (3) is again fixed (S5).

4. The method according to any of the preceding claims, ***characterized in that*** the transport unit (3) is moved into the adjustment area (S1) before it is used for the first time in the transportation system (1).

5. The method according to any of the preceding claims, ***characterized in that*** the transport unit (3) is moved into the adjustment area (S1) after a predeterminable number of times of usage in the transportation system (1).

6. The method according to any of the preceding claims, ***characterized in that*** the transport unit (3) is moved into the adjustment area after maintenance (S1), before being uses anew in the transportation system (1).

7. A service station (16) for adjusting a transport unit (3) of an electromagnetic transportation system (1), wherein the transport unit (3) can be arranged to be movable along a stator (2) of the electromagnetic transportation system (1), and wherein the transport unit (3) has a base body (4), an encoder track (10) connected to the base body (4) for position determination, and a carrier unit (7) for transporting objects (8), which is detachably connected to the base body (4), ***characterized in that*** at least one adjusting segment (17), which forms an adjustment area, and a positioning device (18, 19), which is arranged in the adjustment area, are provided, wherein the transport unit (3) can be movably arranged on the adjusting segment (17) to be positioned at an adjusting position (P) in the adjustment area, and wherein the positioning device (18, 19) is designed to align the carrier unit (7) and the encoder track (10) to the base body (4) of a transport unit (3) positioned in the adjustment position (P) relative to one another in such a way that while using the transport unit (3) in the transportation system (1), an object (8) arranged on the carrier unit (7) maintains a position in the transportation system (1) predetermined for a particular processing in a particular workstation.

8. The service station (16) according to claim 7, ***characterized in that*** furthermore, at least one mounting device is provided which is designed to release a connection between the base body (4) and the carrier unit (7) and/or between the base body (4) and the encoder track (10) to such an extent that the carrier unit (7) and/or the encoder track (10) can be moved in at least one degree of freedom relative to the base body (4) of the transport unit (3).

9. The service station (16) according to claim 8, ***characterized in that*** the at least one mounting device is further configured to again fix the connection between the base body (4) and the carrier unit (7) and/or between the base body (4) and the encoder track (10) after the alignment of the carrier unit (7).

10. The service station (13) according to any of claims 7 to 9, ***characterized in that*** the positioning device (18) is designed as a mechanical stop.

11. The service station (13) according to any of claims 7 to 9, ***characterized in that*** the positioning device (19) is designed as an automation unit, in particular as a robot unit.

12. The service station (16) according to claim 11, ***characterized in that*** the automation unit (19) further comprises the at least one mounting device.

13. The service station (16) according to any of claims 7 to 12, ***characterized in that*** the service station (16) is designed as a "standalone" service station.

14. The service station (16) according to any of claims 7 to 12, ***characterized in that*** the service station (16) is integrated in the electromagnetic transportation system (1).
